# EUROPEAN PATENT SPECIFICATION

(11) **EP 3 059 430 B1**
(45) Date of publication and mention of the grant of the patent: **16.10.2019**
(21) Application number: 15155850.9
(22) Date of filing: 19.02.2015
(51) Int. Cl.: F02G 5/00, F01K 23/06, F01K 25/08, F02B 43/00, F02G 5/02

(54) **Combustion engine provided with a waste heat recovery system**
Verbrennungsmotor mit einem Abwärmerückgewinnungssystem
Moteur à combustion pourvu d'un système de récupération de chaleur perdue

(43) Date of publication of application: 24.08.2016
(73) Proprietor: FPT Motorenforschung AG, 9320 Arbon (CH)
(72) Inventor: Gstrein, Wolfgang, 6900 BREGENZ (AT)
(74) Representative: Franzolin, Luigi

(56) References cited:
- EP-A2- 2 495 422
- WO-A1-00/47874
- DE-A1-102009 039 551
- DE-A1-102011 117 054
- DE-A1-102012 221 153
- US-A1- 2013 205 776
- US-A1- 2015 013 328

## Description

### Field of the invention

The present invention relates to the field of the combustion engines provided with system capable to recover energy from the exhaust gasses in order to produce electrical and/or to supplement the combustion engine through a thermodynamic cycle.

### Description of the prior art

The Waste heat recovery systems are well known since a long time in the combustion engine field in order to increase the overall efficiency of the combustion engine.

One of the most valid cycles implemented to recovery energy is the Rankine cycle, usually adopting ethanol, water and refrigerants as working medium.

Several works have been published discussing on the ideal working medium.

Ethanol represents a good compromise between the use of water and refrigerants, the first being more economic and safe, the second being more efficient but less ecologic.

All the simulations/tests account for the various critical temperatures and latent heat of vaporization. Then the efficiencies are evaluated.

Ethanol implementation is limited to 250°C due to consequent thermal degradation that requires the replacement of the ethanol with time consumption operations.

The pure Ethanol (pure ethyl alcohol) degrades by decomposing into ethylene and water and other components occurs at ca. 500°C. The publication "REACTIONS OF ETHYL ALCOHOL" HERBERT E. MORRIS - Department of Chemistry, University of Alberta, Edmonton, Canada (Received September 10, 1991) represents a useful source in order to understand the behavior of Ethanol in respect of temperature decomposition.

However, several additives are added in order to preserve the WHR from corrosion or other unwanted effects. Therefore, the additivated Ethanol cannot be implemented before 250°C +/- 10°C. However the problem, substantially, does not change in case new additives would permit to improve such limit of a few degrees.

Therefore, in view of the presence of additives, the present description, referring simply to "Ethanol", refers to a "Ethanol based working medium" in view of such mandatory presence of additives.

DE 10 2009 039 551 A1 discloses a combustion engine provided with a Waste Heat Recovery System draining thermal energy from an exhaust pipe in order to produce mechanical energy by exploiting ethanol as working medium, wherein the combustion engine comprises an exhaust line connected to the combustion engine exhaust manifold and wherein the WHR comprises a fresh ethanol tank connected with a first point of a WHR ethanol circuit, in order to replace the WHR circuit ethanol with fresh one, and a pipe connection for supplying an engine intake with ethanol from a second point of the WHR medium circuit.

### Summary of the invention

The main object of the present invention is to increase the thermodynamic efficiency of a waste heat recovery system (WHR) implementing ethanol as working medium, associated to a combustion engine.

The main principle of the invention is to permit the increasing of the highest working temperature of the ethanol, beyond the Ethanol based critical degradation temperature, by reusing the thermal degraded ethanol as fuel injected in a point of the exhaust line of the combustion engine, while an additional ethanol tank is introduced for refilling the waste heat recovery circuit, by restoring a needed amount of working medium for the functioning of the waste heat recovery system (WHR).

Such additional tank could contain fresh Ethanol, namely non-degraded "Ethanol based working medium".

Alternatively, such additional tank could contain non-degraded pure Ethanol and a second additional smaller tank contains suitable additives to be mixed with the pure non-degraded Ethanol before its introduction into the WHR circuit.

Increasing the highest temperature of thermodynamic cycle implies an overall higher efficiency.

According to a preferred embodiment of the present invention, the ethanol is continuously or intermittently withdrawn from the WHR circuit and injected into the combustion engine exhaust line, while fresh ethanol is withdrawn from said fresh ethanol tank and introduced into the WHR circuit.

According to another preferred embodiment of the invention, the degraded ethanol withdrawn by the WRH and replaced by fresh one, is collected into a degraded ethanol tank and successively introduced into the combustion engine exhaust line according to a given strategy.

The combustion engine exhaust line can be provided with a burner in order to increase the exhaust gas temperature, that, in turn, contribute to the WHR efficiency. The burner is provided with fresh air and eventually with ethanol. This ethanol can coincide with the degraded ethanol from the WHR and/or with fresh ethanol from the fresh ethanol tank.

Alternatively, or in combination with the presence of a burner the ethanol is injected upstream of a component of the After treatment system (ATS), preferably the DOC (Catalytic burner) or the DPF (a real burner) if the engine is a Diesel combustion engine or a three-way catalyst of a Otto-cycle engine.

Preferably, such ethanol is injected within the combustion engine exhaust line by mixing the ethanol with compressed air or airless.

According to a preferred embodiment of the invention a dedicated pump is adopted to compress air in order to inject ethanol, or compressed air can be withdrawn from the intake line downstream of the compressor, if any.

One first object of the invention is a combustion engine provided with an ethanol Waste Heat Recovery System according to claim 1.

Another object of the invention is a method for improving an overall efficiency of a combustion engine provided with an ethanol Waste Heat Recovery System.

According to another embodiment of the invention, a portion of the degraded and/or ethanol is also injected into the combustion engine cylinder whether as sole fuel or as additive fuel with respect to another fuel.

These and further objects are achieved by means of the attached claims, which describe preferred embodiment of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a sketch of concept of the present invention,
- Fig. 2 shows a detailed scheme for implementing a preferred embodiment of the present invention.

The same reference numerals and letters in the figures designate the same or functionally equivalent parts.

According to the present invention, the term "second element" does not imply the presence of a "first element", first, second, etc... are used only for improving the clarity of the description and they should not be interpreted in a limiting way.

### Detailed description of the preferred embodiments

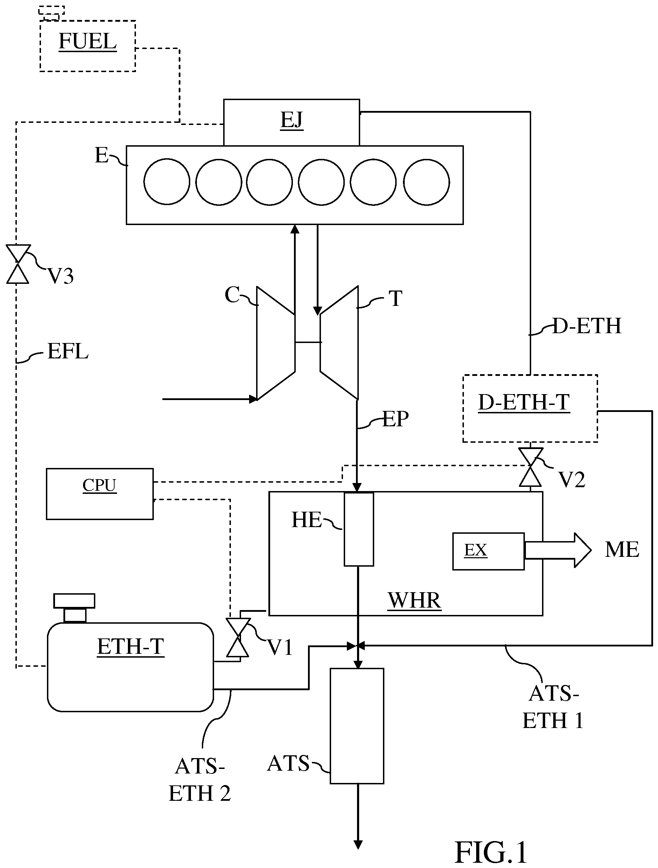

Figure 1 shows a schematic scheme reproducing the basic concept of the present invention.

A combustion engine E, for example a six cylinder combustion engine, is preferably provided with a turbocharger T,C, with the turbine T connected to the exhaust manifold of the combustion engine and its compressor C connected to the intake manifold of the combustion engine to compress fresh air from the outside.

The combustion engine comprises injection means EJ, adapted to supply fuel into the combustion engine cylinders and an exhaust line EP on which an aftertreatment system ATS is arranged to eliminate or reduce the pollutants contained in the exhaust gasses before their delivery to the environment.

On the exhaust line, preferably upstream of the ATS or between devices DOC, SCR, DPF, etc.. of the ATS, acronyms well known to the skilled person in the art, is arranged a main heat exchanger HE capable of extracting heat from the exhaust gas to heat the working medium of a waste heat recovery system WHR to produce steam.

In case the combustion engine is provided with turbocharger, such heat exchanger is arranged downstream of the turbine T.

The heat recuperated by the main heat exchanger HE is, then, converted into mechanical energy ME through an expander EX, per se known.

According to the invention, a tank containing fresh ethanol ETH-T is connected to a first point of the ethanol circuit of the WHR, while another point of the ethanol circuit of the WHR is connected with the exhaust line EP through a pipe ATS-ETH 1.

A first control valve V1 is interposed between the WHR circuit and the fresh ethanol tank ETH-T and a second control valve V2 is interposed between the WHR circuit and the exhaust line EP.

Elaborating means CPU control, at least, said control valves V1 and V2 in order to replace degraded ethanol with fresh ethanol, through the opening of such valves V1, V2.

Preferably, the WHR system, after the condenser CD is provided with a pump P2 for pumping the ethanol towards the exchanger(s) and then towards the steam generator HE, etc.. Preferably, said first point is between the condenser and the pump P2 and said second point is immediately downstream the pump P2. Therefore, said CPU is also adapted to control the pump.

It should be understood that according to an embodiment of the invention, such valves V1 and V2 can be avoided, so that the WHR ethanol is continuously replaced with fresh one, according to the ethanol dosage within the exhaust line.

The WHR system implementing a Rankine thermodynamic cycle, that in generally per se known, is modified, according the present invention, to heat the ethanol beyond the critical temperature of 250°C.

This means that the main heat exchanger HE can be suitably designed to recover a higher energy fraction with respect to known schemes and/or that further exchangers can be implemented in order to pre-heat the ethanol, for example to recover also heat from EGR gasses, and/or that further heating means can be implemented, such as a burner arranged immediately upstream of the main heat exchanger HE, namely between the turbine T and the main exchanger.

Alternatively, or in combination with a redesign of the exchangers, the protection-valve, usually adopted to by-pass the exchanger(s) when the ethanol is approaching 250°C can be adjusted/controlled to operate such WHR at a temperature beyond said 250°C or in general beyond the critical temperature of the Ethanol based medium adopted, depending on the additives added.

Said elaborating means CPU, can be suitably adapted to account for the ethanol temperatures reached within the WHR, in order to estimate the thermal degradation of the same and control said valve V1, V2 to operate said replacement of the degraded ethanol with fresh one.

In case said CPU is adapted to control the by-pass valves (V4) of the WHR exchangers, the WHR highest temperature can be also controlled accounting for a residual amount of fresh ethanol stored in the fresh ethanol tank ETH-T. In this way, in case the fresh ethanol tank is at least near to be empty, the WHR exchanger(s) is controlled in order to slow down the ethanol degradation.

Therefore, a possible WHR ethanol temperature control can be realized as a function of the residual fresh ethanol contained into the Ethanol tank ETH-T.

In case the combustion engine is an Otto-cycle engine, the ethanol could represent also the fuel or one of the fuels burned into the combustion engine; therefore, said second point of the WHR circuit can be also connected with the combustion engine injection means EJ through the pipe line D-ETH and/or the fresh ethanol tank ETH-T is also connected directly with the injection means EJ through a direct supply line EFL. This means that the combustion engine is called to burn fresh ethanol added with degraded ethanol coming from the WHR.

Preferably, a valve V3 is arranged on the supply line EFL in order to better manage the fresh contribution and the degraded contribution of ethanol. This means that the valves V1 - V3 are, preferably, all subjected to a reciprocally coherent control.

Alternatively, the combustion engine even being an Otto-cycle could be supplied with gasoline or it could be a Diesel-cycle supplied with diesel fuel. In these cases, the vehicle can be provided with an additional fuel tank FUEL directly connected with the injection means EJ. Therefore, the degraded ethanol coming from the WHR and/or the fresh ethanol coming directly from the Ethanol tank is added to the main fuel that is respectively gasoline or diesel.

A further valve can be arranged on the pipe line connecting the injection means EJ and the fuel tank FUEL.

The adoption of bio-fuel is well known, however, according to a preferred embodiment of the present invention, the pre-mixing of gasoline or diesel with degraded/fresh ethanol to obtain a bio-fuel is controlled and executed onboard of the vehicle.
Even when the Fuel tank contains a main fuel such as gasoline or diesel, the pipe EFL connecting the fresh ethanol tank with the injection means EJ can be present, preferably with its own valve V3, in those cases where the addition of ethanol to the main fuel is controlled regardless of the degradation rate of ethanol implemented into the WHR system of the invention, operating beyond the critical temperature of 250°C.

The degradation of the ethanol is strictly related to the highest temperature reached within the WHR system. Therefore, when the degradation is really low the valves V1 and V2 are intermittently or slightly opened (not necessarily at the same time) after hundreds of working hours of the WHR. On the contrary, when the degradation is really fast, the ethanol replacement can be continuous.

According to a preferred embodiment of the invention, that can be combined either with an intermittent or a continuous replacement of degraded ethanol, the degraded ethanol withdrawn from the WHR can be first collected into a degraded ethanol tank D-ETH-T arranged between said second valve V2 and said ethanol introduction into the exhaust line EP.
The implementation of this degraded ethanol tank D-ETH-T can be really useful, even if not essential, in order to perform the dosage of ethanol within the exhaust line during optimal conditions, for example,
- to increase the exhaust temperature to improve the ATS performances and/or
- to increase the WHR temperature.
According to the first case, the injection of degraded ethanol upstream of the DOC help the latter to increase the overall ATS temperatures in order to activate the SCR, that usually need at least 200°C. On another side, the injection of degraded ethanol upstream of a DPF help the latter to perform a commanded regeneration.
According to a preferred embodiment, the injection point is immediately upstream of the DOC. According to another preferred embodiment, that can be combined with the others, the (or a further) injection point is immediately upstream of the DPF.
According to another preferred embodiment of the invention, a overheating dedicated combustion chamber, called burner B, is arranged along the exhaust line EP and preferably arranged immediately downstream of the turbine T or equivalently, upstream of the ATS. Between the burner B and the ATS, preferably is arranged an ethanol super heater. According to another preferred embodiment of the invention, that can be combined with the above discussed embodiments, the degraded and/or fresh ethanol can be injected into the combustion engine cylinder not previously mixed with the main fuel, but according to a RCCI combustion engine principle.
RCCI uses in-cylinder fuel blending with at least two fuels of different reactivity and multiple injections to control in-cylinder fuel reactivity to optimize combustion phasing, duration and magnitude. The process involves introduction of a low reactivity fuel into the cylinder to create a well-mixed charge of low reactivity fuel, air and recirculated exhaust gases. The high reactivity fuel is injected before ignition of the premixed fuel occurs using single or multiple injections directly into the combustion chamber. Examples of fuel pairings for RCCI are gasoline and diesel mixtures, ethanol and diesel, and gasoline and gasoline with small additions of a cetane-number booster (di-tert-butyl peroxide (DTBP)).
Therefore, the present invention finds a really favorable context if implemented in one RCCI scheme.
The mechanical energy produced by the Expander EX can be exploited to produce electrical energy and/or can be directed to the combustion engine crankshaft, in order to supplement the combustion engine in a "compound" fashion. However, any way to exploit such mechanical energy can be implemented.

The elaborating means CPU discussed above, according to a preferred embodiment of the present invention implementing said RCCI strategy can be adapted to control such degraded and main fuel injection into the combustion engine cylinder and the replacing of the ethanol used as working medium into the WHR system associated with said combustion engine.

Preferably, such elaborating means coincide with the engine control unit ECU usually implemented to control the combustion engine operation.

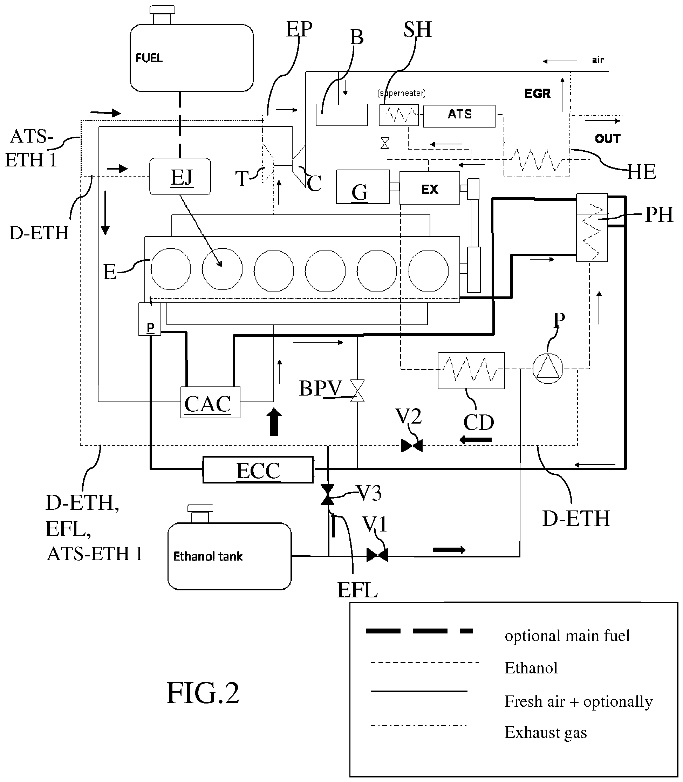

Figure 2 shows a preferred embodiment of the present invention. It should be clear that it represents a comprehensive example and that several features are not essential. The presence of elaborating means is implicit.

This scheme, in addition with respect the previous figure, shows a preferred way to connect the pips, ethanol, fresh air and water among the components.

It should be noted that, according to figure 2, the expander EX is connected either with the engine E crankshaft and also with an electric generator G.

In addition, preferably, immediately downstream of the turbine T is arranged a burner B adapted to introduce fresh air and/or fuel (main fuel, fresh ethanol, degraded ethanol) into the exhaust stream in order to increase the exhaust gasses temperature.

Immediately downstream of the burner B is arranged a super-heater SH, connected with the WHR ethanol circuit through bypass-means, namely pipes and valves V4 and V4'.

When the super-heater SH is active, it represents the last heater for the ethanol steam before to be introduced into the expander EX.

Immediately downstream of the super-heater SH is arranged at least one of the ATS components, listed above, and then the main exchanger HE also called evaporator, being responsible to the evaporation of the ethanol.

It should be understood that, in case the super-heater is not present, then the main exchanger He is preferably arranged before the ATS components, while the burner is optional.

The exhaust gasses, after passing the ATS, regardless whether the last component crossed is an ATS component or the main exchanger HE, can be recirculated according to an EGR strategy. Preferably, a valve, not shown is interposed in the EGR branch in order to adjust the EGR percentage.

According to a preferred embodiment of the invention, the EGR flow is injected into the engine intake upstream of an air filter not shown. Furthermore, the EGR can be refreshed through a cooler that exploits as cooling fluid the WHR ethanol. Thus the EGR cooler (not shown) can works as pre-heater for the WHR ethanol.

According to figure 2, the cooling circuit of the cooling engine comprises a heat exchanger PH immediately downstream of the combustion engine E. This exchanger represents another possible pre-heater for the WHR ethanol.

After these considerations, the WHR circuit comprises, in succession according to the WHR ethanol circulation:
- ethanol Pump P1,
- (optional) pre-heaters,
- main heater HE,
- (optional) super-heater SH,
- Expander EX,
- Condenser CD.
As discussed above, preferably upstream of the pump P1 is connected the fresh tank ETH-T and downstream if the pump P1 connected the withdrawing pipe D-ETH.

Figure 2, in order to simplify the comprehension of the connections exploits four line types. The continuous thin line is implemented to indicate the cooling water.
The cooling water circuit comprises, in succession according to a possible cooling water circulation:
- water pump P,
- charge air cooler CAC to refresh charge directed to the combustion engine,
- the combustion engine E,
- (optional) WHR ethanol pre-heater PH,
- (optional) EGR exchanger defining another WHR ethanol pre-heater,
- Engine coolant cooler ECC.
About the per se known features of the WHR and of the WHR in combination with the combustion engine, we herewith recall everything disclosed in EP1674681 of the same author, and in particular, the adoption of an intake filter and the connection of the EGR pipe upstream with respect to said intake filter.
The preferred embodiment of figure 2 shows another cooling water circulation, where downstream of the pump P a portion of the water circulates through the engine and in parallel another portion through the charge air cooler CAC, then both the braches pass through pre-heater, depicted as a single component, then the convey together to the engine coolant cooler ECC.

A valve BPV can be interposed in the cooling circuit in order to exclude (bypass) or include the eventual pre-heaters (PH) from being fed of warn cooling water.

As disclosed above, such additional tank could contain fresh Ethanol, namely non-degraded "Ethanol based working medium".

Alternatively, such additional tank could contain non-degraded pure Ethanol and a second additional smaller tank contains suitable additives to be mixed with the pure non-degraded Ethanol before its introduction into the WHR circuit.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

## Claims

1. Combustion engine (E) provided with a Waste Heat Recovery System (WHR) draining thermal energy from an exhaust pipe (EP) and/or other sources of the combustion engine (E) in order to produce mechanical energy (ME) by exploiting ethanol as working medium, wherein the combustion engine comprises an exhaust line (EP) connected to the combustion engine exhaust manifold and wherein the WHR comprises a fresh ethanol tank (ETH-T) connected with a first point of a WHR ethanol circuit in order to replace the WHR circuit ethanol with fresh one and a pipe connection (ATS-ETH1) connecting a second point of the WHR medium circuit with said exhaust line (EP) in order to burn ethanol within the exhaust line from the WHR ethanol circuit.

2. Combustion engine according to claim 1, further comprising control means (CPU, V1, V2) adapted to perform at least one of the following steps:
- adjusting a highest temperature of the ethanol of the WHR, even beyond a predefined critical temperature of ethanol or ethanol based medium,
- estimation of a thermal degradation of the ethanol (or ethanol based medium) of the WHR according to highest temperature reached within the WHR,
- adjusting the replacement of the degraded ethanol of the WHR with fresh ethanol.

3. Combustion engine according to claim 2, wherein said adjusting the replacing of the ethanol of the WHR with fresh ethanol is function of said estimation of a thermal degradation of the ethanol of the WHR.

4. Combustion engine according to any of the previous claims, wherein said exhaust line comprises an exhaust gas after treatment system (ATS) comprising one or more devices arranged along said exhaust line (EP) and wherein said ethanol from WHR is introduced into the exhaust line through dosing means upstream of one of said ATS devices.

5. Combustion engine according to claim 4, wherein
- said one ATS device is a DOC and said ethanol introduction is performed in order to increase the ATS temperature and/or
- said one ATS device is a DPF and said ethanol introduction is performed in order to command a DPF regeneration and/or
- wherein a dedicated combustion chamber (B) is arranged on said exhaust line, upstream of said ATS, and wherein said ethanol introduction is performed in order to increase the ethanol temperature of the WHR circuit.

6. Combustion engine according to claim 5, wherein said ethanol is introduced into said exhaust line and/or into said dedicated combustion chamber (B) by means of pressurized air.

7. Combustion engine according to any of the previous claims, wherein the combustion engine (E) further comprises
- injection means (EJ) to inject a fuel into combustion engine cylinders and
- a separate fuel tank (FUEL), for storing a different fuel with respect to ethanol (or ethanol based medium), connected with said injection means,
wherein said injection means (EJ) are also provided with said ethanol from said WHR ethanol circuit and are adapted to mix such different fuel with said ethanol from the WHR circuit in order to supply said combustion engine (E) with bio-fuel.

8. Combustion engine according to any of the previous claims 1 - 6, wherein the combustion engine (E) further comprises
- injection means (EJ) to inject a fuel into combustion engine cylinders and
- a separate fuel tank (FUEL), for storing a different fuel with respect to ethanol, connected with said injection means,
and wherein said fresh ethanol tank (ETH-T) is also connected with said injection means (EJ) directly through a dedicated pipe line (EFL), and wherein said injection means are adapted to mix such different fuel with said ethanol from the WHR circuit and/or from the fresh ethanol tank (ETH-T) in order to supply said combustion engine (E) with bio-fuel.

9. Combustion engine according to any of previous claim 7 or 8, wherein said bio-fuel is obtained before its injection into the combustion engine or said bio-fuel is obtained according to a RCCI strategy.

10. Method for improving an overall efficiency of a combustion engine provided with an ethanol Waste Heat Recovery System (WHR), the method comprising the following steps:
- setting the WHR so that the highest temperature exceed a predetermined ethanol or ethanol based critical temperature,
- replacing the WHR degraded ethanol with fresh one
- introducing the degraded ethanol from a WHR circuit into a combustion engine exhaust line (EP).

11. Method according to claim 10, further comprising
- estimation of a thermal degradation of the ethanol of the WHR according to highest temperature reached within the WHR,
- adjusting the replacing of the ethanol of the WHR circuit with fresh ethanol.

12. Method according to one of the previous claims 10 or 11, further comprising a step of controlling the WHR highest temperature though bypass means and/or though a overheating dedicated combustion chamber (B) arranged on said exhaust line (EP) of the combustion engine.

13. Method according to claim 12, further comprising a step of controlling an injection of fuel within said overheating dedicated combustion chamber (B).

14. Computer program comprising computer program code means adapted to perform all the steps of any of the claims 10 to 13, when said program is run on a computer.

15. A computer readable medium having a program recorded thereon, said computer readable medium comprising computer program code means adapted to perform all the steps of any of the claim 10 to 13, when said program is run on a computer.

16. Vehicle comprising the combustion engine provided with a Waste Heat Recovery System (WHR) draining thermal energy from an exhaust pipe (EP) of the combustion engine (E) in order to produce mechanical energy (ME) and exploiting ethanol as working medium, according to any of the claims from 1 to 9.

## Patentansprüche

1. Brennkraftmaschine (E), die mit einem Abwärmerückgewinnungssystem (WHR) versehen ist, das Wärmeenergie aus einem Auslassrohr (EP) und/oder weiteren Quellen der Brennkraftmaschine (E) abführt, um mechanische Energie (ME) zu erzeugen, indem Ethanol als ein Arbeitsmedium benutzt wird, wobei die Brennkraftmaschine ein Auslassrohr (EP), das mit dem Brennkraftmaschinenabgasverteiler verbunden ist, umfasst und das WHR einen Frischethanol-Tank (ETH-T), der mit einem ersten Punkt eines WHR-Ethanolkreises verbunden ist, um das WHR-Kreisethanol durch frisches Ethanol zu ersetzen, und eine Rohrverbindung (ATS-ETH1), die einen zweiten Punkt des WHR-Mediumkreises mit der Abgasleitung (EP) verbindet, um Ethanol in der Abgasleitung aus dem WHR-Ethanolkreis zu verbrennen, umfasst.

2. Brennkraftmaschine nach Anspruch 1, die ferner Steuermittel (CPU, V1, V2) umfasst, die ausgelegt sind, mindestens einen der folgenden Schritte durchzuführen:
- Anpassen einer höchsten Temperatur des Ethanols des WHR selbst über eine vordefinierte Grenztemperatur von Ethanol oder einem ethanolbasierten Medium,
- Schätzen einer thermischen Zersetzung des Ethanols (oder des ethanolbasierten Mediums) des WHR gemäß der höchsten Temperatur, die im WHR erreicht wird, und
- Anpassen des Ersatzes des zersetzten Ethanols des WHR durch frisches Ethanol.

3. Brennkraftmaschine nach Anspruch 2, wobei das Anpassen des Ersetzens des Ethanols des WHR durch frisches Ethanol eine Funktion der Schätzung einer thermischen Zersetzung des Ethanols des WHR ist.

4. Brennkraftmaschine nach einem der vorhergehenden Ansprüche, wobei die Abgasleitung ein Abgasnachbehandlungssystem (Abgas-ATS) umfasst, das eine oder mehrere Einrichtungen, die entlang des Auslassrohrs (EP) angeordnet sind, umfasst und das Ethanol aus dem WHR über Dosiermittel stromaufwärts einer der ATS-Einrichtungen in die Abgasleitung eingeleitet wird.

5. Brennkraftmaschine nach Anspruch 4, wobei
- die eine ATS-Einrichtung ein DOC ist und die Ethanoleinleitung durchgeführt wird, um die ATS-Temperatur zu erhöhen,
- die eine ATS-Einrichtung ein DPF ist und die Ethanoleinleitung durchgeführt wird, um eine DPF-Regeneration anzuweisen, und/oder
- eine fest zugeordnete Brennkammer (B) in der Abgasleitung stromaufwärts des ATS angeordnet ist und die Ethanoleinleitung durchgeführt wird, um die Ethanoltemperatur des WHR-Kreises zu erhöhen.

6. Brennkraftmaschine nach Anspruch 5, wobei das Ethanol mittels Druckluft in die Abgasleitung und/oder in die fest zugeordnete Brennkammer (B) eingeleitet wird.

7. Brennkraftmaschine nach einem der vorhergehenden Ansprüche, wobei die Brennkraftmaschine (E) ferner Folgendes umfasst:
- Injektionsmittel (EJ), um einen Kraftstoff in Brennkraftmaschinenzylinder einzuspritzen, und
- einen getrennten Kraftstofftank (FUEL), um einen verschiedenen Kraftstoff in Bezug auf Ethanol (oder ein ethanolbasiertes Medium) zu bevorraten, der mit dem Injektionsmittel verbunden ist, wobei
die Injektionsmittel (EJ) außerdem mit dem Ethanol aus dem WHR-Ethanolkreis versorgt werden und ausgelegt sind, einen derartigen verschiedenen Kraftstoff mit dem Ethanol aus dem WHR-Ethanolkreis zu mischen, um die Brennkraftmaschine (E) mit Biokraftstoff zu versorgen.

8. Brennkraftmaschine nach einem der vorhergehenden Ansprüche 1-6, wobei die Brennkraftmaschine (E) ferner Folgendes umfasst:
- Injektionsmittel (EJ), um einen Kraftstoff in Brennkraftmaschinenzylinder einzuspritzen, und
- einen getrennten Kraftstofftank (FUEL), um einen verschiedenen Kraftstoff in Bezug auf Ethanol zu bevorraten, der mit dem Injektionsmittel verbunden ist, wobei
der Frischethanol-Tank (ETH-T) außerdem mit den Injektionsmitteln (EJ) über einen fest zugeordnete Rohrleitung (EFL) direkt verbunden ist und die Injektionsmittel ausgelegt sind, einen derartigen verschiedenen Kraftstoff mit dem Ethanol aus dem WHR-Ethanolkreis und/oder aus dem Frischethanol-Tank (ETH-T) zu mischen, um die Brennkraftmaschine (E) mit Biokraftstoff zu versorgen.

9. Brennkraftmaschine nach einem vorhergehenden Anspruch 7 oder 8, wobei der Biokraftstoff vor seiner Injektion in die Brennkraftmaschine erhalten wird oder der Biokraftstoff gemäß einer RCCI-Strategie erhalten wird.

10. Verfahren zum Verbessern eines Gesamtwirkungsgrades einer Brennkraftmaschine, die mit einem Ethanol-Abwärmerückgewinnungssystem (Ethanol-WHR) versehen ist, wobei das Verfahren die folgenden Schritte umfasst:
- Einstellen des WHR derart, dass die höchste Temperatur eine vordefinierte Grenztemperatur von Ethanol oder einem ethanolbasierten Medium überschreitet,
- Ersetzen des vom WHR zersetzten Ethanols mit einem Frischen und
- Einleiten des zersetzten Ethanols aus einem WHR-Kreis in eine Brennkraftmaschinenabgasleitung (Brennkraftmaschinen-EP).

11. Verfahren nach Anspruch 10, das ferner Folgendes umfasst:
- Schätzen einer thermischen Zersetzung des Ethanols des WHR gemäß der höchsten Temperatur, die im WHR erreicht wird, und
- Anpassen des Ersetzens des zersetzten Ethanols des WHR-Kreises durch frisches Ethanol.

12. Verfahren nach einem der vorhergehenden Ansprüche 10 oder 11, das ferner einen Schritt des Steuerns der höchsten WHR-Temperatur durch Umgehungsmittel und/oder durch eine fest zugeordnete Überhitzungsbrennkammer (B), die in der Abgasleitung (EP) der Brennkraftmaschine angeordnet ist, umfasst.

13. Verfahren nach Anspruch 12, das ferner einen Schritt des Steuerns einer Injektion von Kraftstoff in der fest zugeordneten Überhitzungsbrennkammer (B) umfasst.

14. Computerprogramm, das Computerprogrammcodemittel umfasst, die ausgelegt sind, alle Schritte eines der Ansprüche 10 bis 13 durchzuführen, wenn das Programm in einem Computer ausgeführt wird.

15. Computerlesbares Medium, in dem ein Programm aufgezeichnet ist, wobei das computerlesbare Medium Computerprogrammcodemittel umfasst, die ausgelegt sind, alle Schritte eines der Ansprüche 10 bis 13 durchzuführen, wenn das Programm in einem Computer ausgeführt wird.

16. Fahrzeug, das die Brennkraftmaschine, die mit einem Abwärmerückgewinnungssystem (WHR) versehen ist, das Wärmeenergie aus einem Auslassrohr (EP) der Brennkraftmaschine (E) abführt, um mechanische Energie (ME) zu erzeugen, und Ethanol als ein Arbeitsmedium nutzt, nach einem der Ansprüche 1 bis 9 umfasst.

## Revendications

1. Moteur à combustion (E) muni d'un système de récupération de chaleur perdue (WHR) qui draine l'énergie thermique en provenance d'un tuyau d'échappement (EP) et/ou d'autres sources du moteur à combustion (E) afin de produire de l'énergie mécanique (ME) en exploitant l'éthanol en tant que fluide de travail, dans lequel le moteur à combustion comprend une conduite d'échappement (EP) qui est connectée au collecteur d'échappement du moteur à combustion et dans lequel le WHR comprend un réservoir d'éthanol frais (ETH-T) qui est connecté à un premier point d'un circuit d'éthanol de WHR afin de remplacer l'éthanol du circuit d'éthanol de WHR par de l'éthanol frais et une connexion de tuyau (ATS-ETH1) qui connecte un second point du circuit de milieu de WHR avec ladite conduite d'échappement (EP) afin de brûler l'éthanol à l'intérieur de la conduite d'échappement en provenance du circuit d'éthanol de WHR.

2. Moteur à combustion selon la revendication 1, comprenant en outre un moyen de commande (CPU, V1, V2) qui est adapté de manière à ce qu'il réalise au moins l'une des étapes suivantes :
- le réglage d'une température la plus élevée de l'éthanol du WHR, même au-delà d'une température critique prédéfinie de l'éthanol ou d'un fluide à base d'éthanol ;
- l'estimation d'une dégradation thermique de l'éthanol (ou du fluide à base d'éthanol) du WHR en fonction de la température la plus élevée qui est atteinte à l'intérieur du WHR ; et
- le réglage du remplacement de l'éthanol dégradé du WHR par de l'éthanol frais.

3. Moteur à combustion selon la revendication 2, dans lequel ledit réglage consistant à remplacer l'éthanol du WHR par de l'éthanol frais est fonction de ladite estimation d'une dégradation thermique de l'éthanol du WHR.

4. Moteur à combustion selon l'une quelconque des revendications précédentes, dans lequel ladite conduite d'échappement comprend un système de post-traitement (ATS) de gaz d'échappement qui comprend un ou plusieurs dispositif (s) qui est/sont agencé (s) le long de ladite conduite d'échappement (EP) et dans lequel ledit éthanol en provenance du WHR est introduit à l'intérieur de la conduite d'échappement par l'intermédiaire d'un moyen de dosage en amont de l'un desdits dispositifs d'ATS.

5. Moteur à combustion selon la revendication 4, dans lequel :
- ledit un dispositif d'ATS est un DOC et ladite introduction d'éthanol est réalisée afin d'augmenter la température de l'ATS ; et/ou :
- ledit un dispositif d'ATS est un DPF et ladite introduction d'éthanol est réalisée afin de commander une régénération de DPF ; et/ou :
- une chambre de combustion dédiée (B) est agencée sur ladite conduite d'échappement, en amont dudit ATS, et dans lequel ladite introduction d'éthanol est réalisée afin d'augmenter la température de l'éthanol du circuit d'éthanol de WHR.

6. Moteur à combustion selon la revendication 5, dans lequel ledit éthanol est introduit à l'intérieur de ladite conduite d'échappement et/ou à l'intérieur de ladite chambre de combustion dédiée (B) au moyen d'air sous pression.

7. Moteur à combustion selon l'une quelconque des revendications précédentes, dans lequel le moteur à combustion (E) comprend en outre :
- des moyens d'injection (EJ) pour injecter un carburant à l'intérieur de cylindres du moteur à combustion ; et
- un réservoir de carburant séparé (FUEL), pour stocker un carburant différent par rapport à l'éthanol (ou par rapport au fluide à base d'éthanol), qui est connecté auxdits moyens d'injection ;
dans lequellesdits moyens d'injection (EJ) sont également pourvus dudit éthanol en provenance dudit circuit d'éthanol de WHR et sont adaptés pour mélanger ce carburant différent avec ledit éthanol en provenance du circuit d'éthanol de WHR afin d'alimenter ledit moteur à combustion (E) avec du biocarburant.

8. Moteur à combustion selon l'une quelconque des revendications précédentes 1 à 6, dans lequel le moteur à combustion (E) comprend en outre :
- des moyens d'injection (EJ) pour injecter un carburant à l'intérieur de cylindres du moteur à combustion ; et
- un réservoir de carburant séparé (FUEL), pour stocker un carburant différent par rapport à l'éthanol, qui est connecté auxdits moyens d'injection ;
et dans lequel ledit réservoir d'éthanol frais (ETH-T) est également connecté auxdits moyens d'injection (EJ) directement par l'intermédiaire d'une conduite en tuyau dédiée (EFL), et dans lequel lesdits moyens d'injection sont adaptés pour mélanger ce carburant différent avec ledit éthanol en provenance du circuit d'éthanol de WHR et/ou en provenance du réservoir d'éthanol frais (ETH-T) afin d'alimenter ledit moteur à combustion (E) avec du biocarburant.

9. Moteur à combustion selon l'une quelconque des revendications précédentes 7 ou 8, dans lequel ledit biocarburant est obtenu avant son injection à l'intérieur du moteur à combustion ou ledit biocarburant est obtenu conformément à une stratégie RCCI.

10. Procédé pour améliorer un rendement global d'un moteur à combustion qui est muni d'un système de récupération de chaleur perdue (WHR), le procédé comprenant les étapes suivantes :
- l'établissement du WHR de telle sorte que la température la plus élevée excède une température critique prédéterminée d'éthanol ou basée sur l'éthanol ;
- le remplacement de l'éthanol dégradé de WHR par de l'éthanol frais ; et
- l'introduction de l'éthanol dégradé en provenance d'un circuit d'éthanol de WHR à l'intérieur d'une conduite d'échappement de moteur à combustion (EP) .

11. Procédé selon la revendication 10, comprenant en outre :
- l'estimation d'une dégradation thermique de l'éthanol du WHR en fonction d'une température la plus élevée qui est atteinte à l'intérieur du WHR ; et
- le réglage du remplacement de l'éthanol du circuit d'éthanol de WHR par de l'éthanol frais.

12. Procédé selon l'une quelconque des revendications précédentes 10 ou 11, comprenant en outre une étape consistant à commander la température la plus élevée du WHR par l'intermédiaire de moyens de dérivation et/ou par l'intermédiaire d'une chambre de combustion de surchauffe (B) dédiée qui est agencée sur ladite conduite d'échappement (EP) du moteur à combustion.

13. Procédé selon la revendication 12, comprenant en outre une étape consistant à commander une injection du carburant à l'intérieur de ladite chambre de combustion de surchauffe (B) dédiée.

14. Programme informatique comprenant des moyens de code de programme informatique adaptés pour réaliser toutes les étapes de l'une quelconque des revendications 10 à 13, lorsque ledit programme est exécuté sur un ordinateur.

15. Support pouvant être lu par un ordinateur et comportant un programme enregistré sur lui, ledit support pouvant être lu par un ordinateur comprenant des moyens de code de programme informatique adaptés pour réaliser toutes les étapes selon l'une quelconque des revendications 10 à 13, lorsque ledit programme est exécuté sur un ordinateur.

16. Véhicule comprenant le moteur à combustion muni d'un système de récupération de chaleur perdue (WHR) drainant l'énergie thermique en provenance d'un tuyau d'échappement (EP) du moteur à combustion (E) afin de produire de l'énergie mécanique (ME) et exploitant l'éthanol en tant que fluide de travail, selon l'une quelconque des revendications 1 à 9.
